# FASCICULE DE BREVET EUROPEEN

(11) **EP 3 882 108 B1**
(45) Date de publication et mention de la délivrance du brevet: **04.05.2022**
(21) Numéro de dépôt: 21162790.6
(22) Date de dépôt: 16.03.2021
(51) Int. Cl.: B62D 21/11, B60K 28/10, B60R 21/34, B60B 35/16

(54) **ESSIEU POUR CHÂSSIS DE VÉHICULE ROUTIER DE TRANSPORT DE MARCHANDISES**
ACHSE FÜR FAHRGESTELL EINES FAHRZEUGS FÜR DEN STRASSENGÜTERVERKEHR
AXLE FOR FRAME OF A ROAD VEHICLE FOR TRANSPORTING GOODS

(30) Priorité: 20.03.2020 FR 2002729
(43) Date de publication de la demande: 22.09.2021
(73) Titulaire: Jean Chereau SAS, 50220 Ducey (FR)
(72) Inventeur: GARNIER, Arnaud, 53190 LANDIVY (FR); COURTEILLE, Benoît, 50300 AVRANCHES (FR)
(74) Mandataire: Casalonga

(56) Documents cités:
- EP-A2- 3 210 804
- WO-A1-2006/041348
- CN-A- 108 973 530
- DE-A1- 3 503 656
- US-A- 4 016 947
- US-A1- 2018 290 488

## Description

La présente invention concerne le domaine des véhicules routiers de transport de marchandises tels que des camions, des semi-remorques, des remorques ou des porteurs.

Un véhicule routier de transport de marchandises comprend un châssis et une carrosserie montée sur le châssis et délimitant un espace de chargement intérieur.

Le châssis comprend notamment deux longerons longitudinaux fixés sur le plancher de la carrosserie. Classiquement, comme notamment connu de EP 3 210 804 A2, le châssis est équipé d'un train roulant qui comprend au moins un essieu pour le support de roues et des suspensions d'essieu pneumatiques montées sur les longerons du châssis.

Dans le domaine du transport routier de marchandises, il arrive fréquemment que des individus réussissent de manière clandestine à s'introduire à l'intérieur de l'espace de chargement de la carrosserie ou à s'accrocher au châssis sous cette carrosserie.

Cela met en danger la sécurité de ces individus et engage également la responsabilité du transporteur routier.

La présente invention vise à remédier à ces inconvénients.

L'invention a pour objet un essieu pour châssis de véhicule routier de transport de marchandises comprenant un corps d'essieu transversal destiné à supporter des roues et comprenant une surface extérieure périphérique pourvue, à chaque extrémité, d'une portée pour le montage d'un bras de suspension longitudinal de suspension d'essieu.

Selon une caractéristique générale, l'essieu comprend en outre au moins un carénage fixé sur la surface extérieure périphérique du corps d'essieu et pourvu d'au moins une protubérance située transversalement entre les portées de montage de la surface extérieure périphérique du corps d'essieu, s'étendant en saillie verticalement vers le haut par rapport à ladite surface extérieure périphérique et conformée pour empêcher un individu de se stabiliser sur le corps d'essieu dans la zone de ladite protubérance

Les sens « transversal » et « vertical » sont utilisés en considérant l'essieu dans une position montée sur le châssis associé.

Avec un tel corps d'essieu, on réduit fortement le risque qu'un individu puisse s'accrocher à ce corps sous la carrosserie associée. En effet, la forme de la ou des protubérances du carénage peut avantageusement être prévue pour ne pas ménager de surface d'appui plane horizontale ayant une dimension suffisante pour permettre à un individu de se maintenir de manière stable dans cette zone. La forme de la ou des protubérances peut par exemple présenter une ou des formes en pointe.

Dans un mode de réalisation, ladite protubérance du carénage s'étend transversalement sur au moins 50% de la longueur de la portion de la surface extérieure périphérique du corps d'essieu qui est située transversalement entre les portées de montage, et notamment sur au moins 70% de cette longueur, et de préférence sur au moins 90%.

Dans un mode de réalisation, ladite protubérance du carénage présente une section décroissante en direction de son extrémité libre.

Selon une conception, ladite protubérance peut s'étendre transversalement sur toute la longueur dudit carénage.

Ledit carénage peut comprendre une portion de montage fixée sur la surface extérieure périphérique du corps d'essieu, en concordance de forme avec cette surface extérieure périphérique, et supportant ladite protubérance.

L'essieu peut comprendre en outre au moins un collier de serrage enroulé autour du corps d'essieu pour la fixation dudit carénage sur le corps d'essieu. Alternativement, il est possible de prévoir d'autres types de fixation, par exemple par collage ou par soudure.

Selon une conception, l'essieu peut comprendre au moins deux carénages fixés sur le corps d'essieu et pourvus chacun d'au moins une protubérance, lesdits carénages étant espacés entre eux dans le sens transversal.

L'invention concerne également un châssis pour véhicule routier de transport de marchandises comprenant au moins deux longerons longitudinaux, une pluralité de traverses s'étendant transversalement entre les longerons, au moins un essieu tel que défini précédemment supportant des roues, et au moins deux suspensions d'essieu comprenant chacune un bras de suspension fixé sur ledit essieu et monté de façon pivotante sur l'un des longerons ou sur l'une des traverses.

La présente invention sera mieux comprise à la lecture de la description détaillée de modes de réalisation pris à titre d'exemples nullement limitatifs et illustrés par les dessins annexés sur lesquels :
[Fig 1] est une vue en perspective d'un châssis équipé d'un essieu selon un premier exemple de réalisation de l'invention,
[Fig 2] est une vue en perspective de l'essieu de la figure 1,
[Fig 3] est une vue en perspective d'un des carénages de l'essieu de la figure 2, et
[Fig 4]

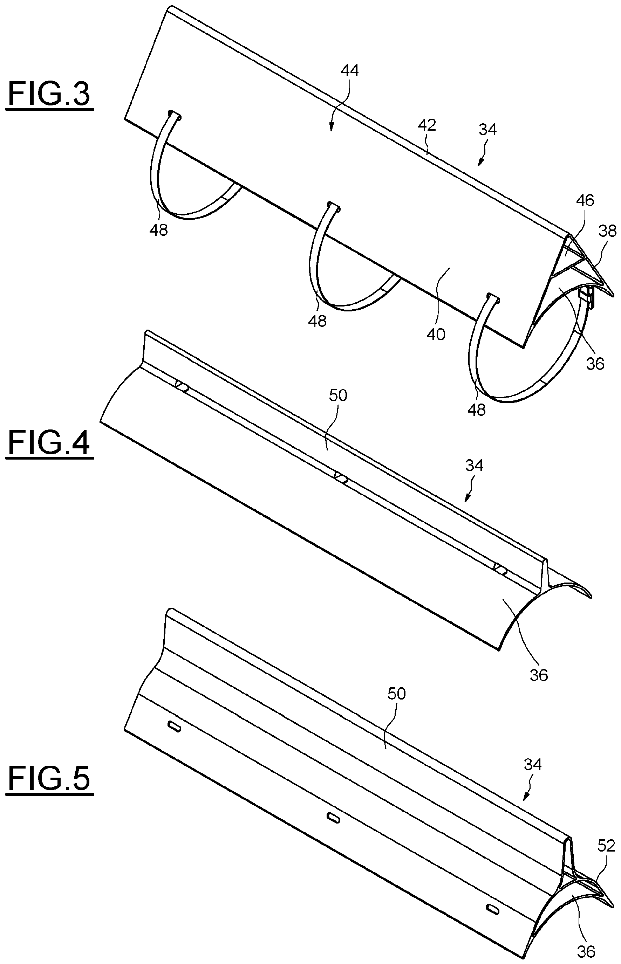

[Fig 5] sont des vues en perspective de carénages selon d'autres exemples de réalisation de l'invention.

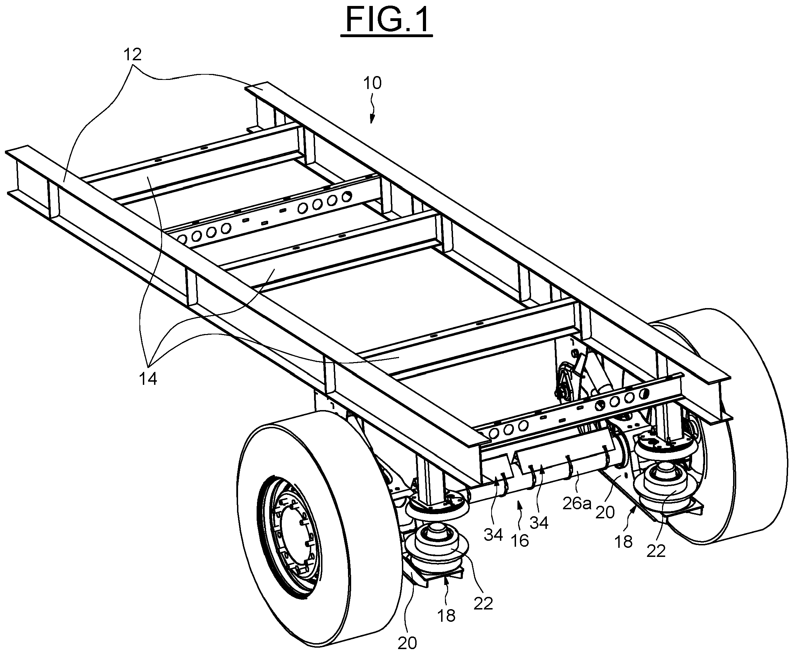

Sur la figure 1, on a représenté un châssis 10 porteur de véhicule de transport routier s'étendant longitudinalement et comprenant deux longerons 12 longitudinaux, et une pluralité de traverses 14 s'étendant transversalement entre les longerons 12 et fixées sur ceux-ci.

Le châssis 10 comprend également un train roulant qui est pourvu d'une pluralité d'essieux pour le support de roues (non référencées), un seul essieu 16 étant représenté sur la figure 1.

Le châssis 10 comprend encore une paire de suspensions d'essieu 18 associées à chaque essieu 16 et montées sur les longerons 12. Chaque suspension d'essieu 18 est équipée d'un bras de suspension 20 longitudinal supportant l'essieu 16 et monté pivotant sur l'un des longerons 12 du châssis. L'essieu 16 est fixé sur le bras de suspension. Chaque suspension d'essieu 18 est également équipée d'un coussin de suspension 22 (représenté partiellement) qui est interposé verticalement entre le bras de suspension 20 et le longeron 12 associé, et d'un vérin amortisseur 24 articulé à l'une de ses extrémités sur le bras de suspension 20 et à l'autre extrémité sur le longeron 12 associé.

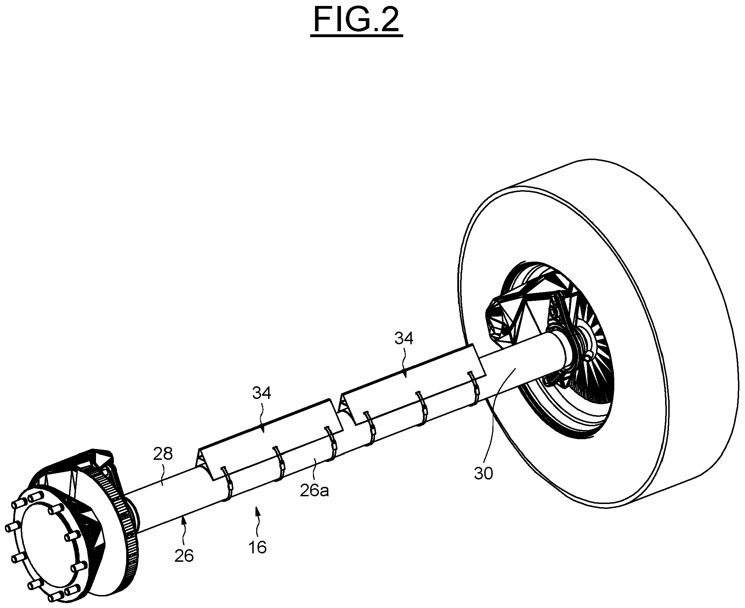

Comme illustré plus visiblement à la figure 2, chaque essieu 16 comprend un corps d'essieu 26 transversal supportant à chaque extrémité une roue. Le corps d'essieu 26 est pourvu d'une surface extérieure 26a périphérique. Dans l'exemple de réalisation illustré, la surface extérieure 26a périphérique est cylindrique. En variante, le corps d'essieu 26 peut présenter d'autres sections qu'une section circulaire, par exemple polygonale telle que carrée ou rectangulaire. Un moyeu (non référencé) est fixé à chaque extrémité transversale du corps d'essieu 26 pour le support de la roue.

La surface extérieure 26a du corps d'essieu est pourvue, à chaque extrémité, d'une portée 28, 30 pour le montage du bras de suspension 20 associé (figure 1).

L'essieu 16 comprend deux carénages 34 fixés sur le corps d'essieu 26 pour réaliser une fonction anti-stabilisation.

Les carénages 34 sont situés transversalement entre les bras de suspension 20 et les portées (non visibles) de la surface extérieure 26a du corps d'essieu sur lesquelles ces bras sont montés. Les carénages 34 recouvrent la majeure partie de la longueur de la portion de la surface extérieure 26a du corps d'essieu qui est située entre ces portées 28, 30 de montage.

Les carénages 34 sont espacés entre eux dans le sens transversal de manière à permettre le passage d'une tige de réglage (non représentée) de l'assiette du châssis qui est reliée d'un côté à l'essieu 16 et de l'autre côté à une valve de nivellement.

Les carénages 34 sont ici identiques entre eux. Les deux carénages 34 étant identiques dans cet exemple, on décrira uniquement l'un d'entre eux.

Comme illustré plus visiblement à la figure 3, le carénage 34 comprend une portion de montage 36 qui entoure en partie la surface extérieure du corps d'essieu, et deux flancs 38, 40 qui s'étendent obliquement vers le haut à partir de la portion de montage 36 et se rejoignent à leur extrémité supérieure en formant un sommet 42. Le sommet 42 est situé verticalement à distance de la portion de montage 36. Le flanc 38, respectivement 40, s'étend à partir d'une extrémité arrière, respectivement avant, de la portion de montage 36. La portion de montage 36 est en concordance de forme avec le corps d'essieu 26.

Dans l'exemple de réalisation illustré, les flancs 38, 40 sont symétriques l'un par rapport à l'autre en considérant un plan vertical médian du carénage 34 par le sommet 42. Alternativement, il est possible de prévoir des flancs 38, 40 non symétriques. Les flancs 38, 40 sont ici rectilignes. Alternativement, les flancs 38, 40 peuvent présenter d'autres formes, par exemple concave ou convexe.

Les flancs 38, 40 du carénage forment sur le carénage 42 une protubérance 44 s'étendant en saillie vers le haut par rapport au corps d'essieu 26. La protubérance 44 s'étend en saillie vers le haut par rapport à la surface extérieure 26a du corps d'essieu 26. La protubérance 44 s'étend du côté du châssis 10 (figure 1). La protubérance 44 est située transversalement entre les portées 28, 30 de montage. Dans cet exemple de réalisation, la protubérance 44 présente une forme générale triangulaire.

Compte tenu de la forme de la protubérance 44, le corps d'essieu 26 ne présente pas, dans la zone de cette protubérance, de surface d'appui plane horizontale qui peut permettre à un individu de se stabiliser sur le corps d'essieu.

Dans l'exemple de réalisation illustré, le carénage 34 comprend intérieurement une paroi de rigidification 46 reliant les flancs 38, 40 et située verticalement entre la portion de montage 36 et le sommet 42.

Le carénage 34 est réalisé en une seule pièce, par exemple dans une matière métallique, notamment en acier ou en aluminium. Le carénage 34 peut alternativement être réalisé par moulage d'une matière synthétique.

De sorte à assurer la fixation du carénage 34 il est prévu des colliers de serrage 48 enroulés autour de la surface extérieure du corps d'essieu. Les colliers de serrage 48 s'étendent au travers de trous traversants (non référencés) des flancs 38, 40 du carénage. Les colliers de serrage 48 peuvent être réalisés en matière métallique ou synthétique.

D'autres exemples de réalisation de carénage 34 sont illustrés aux figures 4 et 5, sur lesquelles les éléments identiques portent les mêmes références.

Le carénage 34 illustré à la figure 4 comprend une protubérance 50 s'étendant en saillie vers le haut à partir de la portion de montage 36. La protubérance 50 s'étend transversalement sur la portion de montage 36, ici sur la totalité de sa longueur. La protubérance 50 présente ici en section droite une forme triangulaire. Dans cet exemple, les trous traversants pour le passage des colliers de serrage sont ménagés dans la zone de raccordement entre la portion de montage 36 et la protubérance 50 du carénage.

Le carénage 34 illustré à la figure 5 diffère principalement de l'exemple précédent en ce qu'il est équipé en outre d'une portion de support 52 de la protubérance 50 qui laisse subsister un jeu vertical avec la portion de montage 36. La portion de support 52 se raccorde à la portion de montage 36 et présente aussi une forme générale concave orientée du côté de cette portion de montage. Contrairement à l'exemple de réalisation précédent, la protubérance 50 présente ici une section creuse.

Dans ces deux exemples de réalisation, les carénages 34 sont aussi réalisés en une seule pièce. En variante, les carénages pourraient être réalisés en plusieurs parties.

Dans les exemples de réalisation illustrés, les protubérances 44, 50 du carénage rapportées sur le corps d'essieu 26 présentent une forme générale triangulaire.

En variante, il est possible, sans sortir du cadre de l'invention, de prévoir pour l'essieu 16 une protubérance en saillie qui présente d'autres formes, par exemple une forme ondulée s'étendant transversalement. Il est aussi possible de prévoir une pluralité de protubérances espacées les unes par rapport aux autres dans le sens transversal le long du carénage associé. Les protubérances peuvent ou non être agencées en rangée(s). Ces protubérances peuvent par exemple présenter une forme cylindrique, une forme pointue, une forme en arc de cercle, etc.

De manière générale, la ou les protubérances de l'essieu 16 sont conformées pour empêcher un individu de se stabiliser sur le corps d'essieu 26 dans la zone de cette ou de ces protubérances.

## Revendications

1. Essieu pour châssis de véhicule routier de transport de marchandises comprenant un corps d'essieu (26) transversal destiné à supporter des roues et comprenant une surface extérieure (26a) périphérique pourvue, à chaque extrémité, d'une portée (28, 30) pour le montage d'un bras de suspension longitudinal de suspension d'essieu, **caractérisé en ce que** l'essieu comprend en outre au moins un carénage (34) fixé sur la surface extérieure (26a) périphérique du corps d'essieu et pourvu d'au moins une protubérance (44 ; 50) située transversalement entre les portées (28, 30) de montage de la surface extérieure (26a) périphérique du corps d'essieu (26), s'étendant en saillie verticalement vers le haut par rapport à ladite surface extérieure (26a) périphérique et conformée pour empêcher un individu de se stabiliser sur le corps d'essieu dans la zone de ladite protubérance.

2. Essieu selon la revendication 1, dans lequel ladite protubérance (44 ; 50) du carénage s'étend transversalement sur au moins 50% de la longueur de la portion de la surface extérieure (26a) périphérique du corps d'essieu qui est située transversalement entre les portées (28, 30) de montage.

3. Essieu selon la revendication 1 ou 2, dans lequel ladite protubérance (44 ; 50) du carénage présente une section décroissante en direction de son extrémité libre.

4. Essieu selon l'une quelconque des revendications précédentes, dans lequel ladite protubérance (44 ; 50) s'étend transversalement sur toute la longueur dudit carénage.

5. Essieu selon l'une quelconque des revendications précédentes, dans lequel ledit carénage (34) comprend une portion de montage (36) fixée sur la surface extérieure (26a) périphérique du corps d'essieu, en concordance de forme avec la surface extérieure (26a), et supportant ladite protubérance (44 ; 50).

6. Essieu selon l'une quelconque des revendications précédentes, comprenant en outre au moins un collier de serrage (48) enroulé autour de la surface extérieure (26a) périphérique du corps d'essieu pour la fixation dudit carénage sur le corps d'essieu.

7. Essieu selon l'une quelconque des revendications précédentes, comprenant au moins deux carénages (34) fixés sur la surface extérieure (26a) périphérique du corps d'essieu et pourvus chacun d'au moins une protubérance (44 ; 50), lesdits carénages (34) étant espacés entre eux dans le sens transversal.

8. Châssis pour véhicule routier de transport de marchandises comprenant au moins deux longerons (12) longitudinaux, une pluralité de traverses (14) s'étendant transversalement entre les longerons (12), au moins un essieu (16) selon l'une quelconque des revendications précédentes supportant des roues, et au moins deux suspensions d'essieu (18) comprenant chacune un bras de suspension (20) fixé sur ledit essieu et monté de façon pivotante sur l'un des longerons (12) ou sur l'une des traverses (14).

## Patentansprüche

1. Achse für ein Fahrgestell eines Fahrzeugs für den Straßengüterverkehr, umfassend einen quer verlaufenden Achskörper (26), der dazu bestimmt ist, Räder zu stützen, und umfassend eine umlaufende äußere Oberfläche (26a), die an jedem Ende mit einer Auflagefläche (28, 30) für die Montage eines länglichen Aufhängungsarms zur Achsaufhängung versehen ist, **dadurch gekennzeichnet, dass** die Achse weiter wenigstens eine Verkleidung (34) umfasst, die auf der umlaufenden äußeren Oberfläche (26a) des Achskörpers befestigt ist und mit wenigstens einem Vorsprung (44; 50) versehen ist, der quer verlaufend zwischen den Auflageflächen (28, 30) zur Montage der umlaufenden äußeren Oberfläche (26a) des Achskörpers (26) angeordnet ist, sich vertikal nach oben in Bezug auf die umlaufende äußere Oberfläche (26a) erstreckt und ausgebildet ist, um ein Individuum daran zu hindern, sich auf dem Achskörper im Bereich des Vorsprungs zu stabilisieren.

2. Achse nach Anspruch 1, wobei sich der Vorsprung (44; 50) der Verkleidung quer verlaufend über wenigstens 50 % der Länge des Abschnitts der umlaufenden äußeren Oberfläche (26a) des Achskörpers erstreckt, die quer verlaufend zwischen den Auflageflächen (28, 30) zur Montage angeordnet ist.

3. Achse nach Anspruch 1 oder 2, wobei der Vorsprung (44; 50) der Verkleidung einen abnehmenden Querschnitt in Richtung seines freien Endes aufweist.

4. Achse nach einem der vorstehenden Ansprüche, wobei sich der Vorsprung (44; 50) quer verlaufend über die gesamte Länge der Verkleidung erstreckt.

5. Achse nach einem der vorstehenden Ansprüche, wobei die Verkleidung (34) einen Montageabschnitt (36) umfasst, der auf der umlaufenden äußeren Oberfläche (26a) des Achskörpers in Formübereinstimmung mit der äußeren Oberfläche (26a) befestigt ist und den Vorsprung (44; 50) stützt.

6. Achse nach einem der vorstehenden Ansprüche, weiter umfassend wenigstens eine Klemmschelle (48), die um die umlaufende äußere Oberfläche (26a) des Achskörpers für die Befestigung der Verkleidung auf dem Achskörper gewickelt ist.

7. Achse nach einem der vorstehenden Ansprüche, umfassend wenigstens zwei Verkleidungen (34), die auf der umlaufenden äußeren Oberfläche (26a) des Achskörpers befestigt sind und jeweils mit wenigstens einem Vorsprung (44; 50) versehen sind, wobei die Verkleidungen (34) in der Querrichtung zueinander beabstandet sind.

8. Fahrgestell für ein Fahrzeug für den Straßengüterverkehr, umfassend wenigstens zwei Längsträger (12), eine Vielzahl von Querträgern (14), die sich quer verlaufend zwischen den Längsträgern (12) erstrecken, wenigstens eine Achse (16) nach einem der vorstehenden Ansprüche, die Räder stützt, und wenigstens zwei Achsaufhängungen (18), die jeweils einen Aufhängungsarm (20) umfassen, der auf der Achse befestigt ist und schwenkend auf einem der Längsträger (12) oder auf einem der Querträger (14) montiert ist.

## Claims

1. An axle for the chassis of a road vehicle for transporting goods comprising a transverse axle body (26) intended to support wheels and comprising an outer peripheral surface (26a) provided, at each end, with a bearing surface (28, 30) for mounting a longitudinal suspension arm for suspending an axle, **characterised in that** the axle further comprises at least one fairing (34) fixed to the outer peripheral surface (26a) of the axle body and provided with at least one protrusion (44; 50) located transversely between the bearing surfaces (28, 30) for mounting the outer peripheral surface (26a) of the axle body (26), projecting vertically upwards relative to said outer peripheral surface (26a) and shaped to prevent a person from stabilising on the axle body in the area of said protrusion.

2. The axle according to claim 1, wherein said protrusion (44; 50) of the fairing extends transversely over at least 50% of the length of the portion of the outer peripheral surface (26a) of the axle body which is located transversely between the mounting bearing surfaces (28, 30) .

3. The axle according to claim 1 or 2, wherein said protrusion (44; 50) of the fairing has a decreasing section in the direction of its free end.

4. The axle according to any one of the preceding claims, wherein said protrusion (44; 50) extends transversely over the entire length of said fairing.

5. The axle according to any one of the preceding claims, wherein said fairing (34) comprises a mounting portion (36) fixed to the outer peripheral surface (26a) of the axle body, said mounting portion matching the shape of the outer surface (26a), and supporting said protrusion (44; 50).

6. The axle according to any one of the preceding claims, further comprising at least one clamp (48) wound around the outer peripheral surface (26a) of the axle body for fixing said fairing on the axle body.

7. The axle according to any one of the preceding claims, comprising at least two fairings (34) fixed to the outer peripheral surface (26a) of the axle body and each provided with at least one protrusion (44; 50), said fairings (34) being spaced apart in the transverse direction.

8. A chassis for a road vehicle for transporting goods comprising at least two longitudinal side members (12), a plurality of cross members (14) extending transversely between the side members (12), at least one axle (16) according to any one of the preceding claims supporting wheels, and at least two axle suspensions (18) each comprising a suspension arm (20) fixed to said axle and pivotally mounted on one of the side members (12) or on one of the cross members (14).
